Europäisches Patentamt

European Patent Office

Office européen des brevets

(19)

(11) **EP 1 119 927 B1**

(12) **EUROPÄISCHE PATENTSCHRIFT**

(45) Veröffentlichungstag und Bekanntmachung des Hinweises auf die Patenterteilung:
**26.05.2004 Patentblatt 2004/22**

(21) Anmeldenummer: **99970224.4**

(22) Anmeldetag: **01.10.1999**

(51) Int Cl.$^{7}$: **H04B 7/26**

(86) Internationale Anmeldenummer:
**PCT/DE1999/003168**

(87) Internationale Veröffentlichungsnummer:
**WO 2000/021219 (13.04.2000 Gazette 2000/15)**

(54) **VERFAHREN UND FUNK-KOMMUNIKATIONSSYSTEM ZUR DATENÜBERTRAGUNG ÜBER EINE FUNKSCHNITTSTELLE ZWISCHEN EINER BASISSTATION UND EINER TEILNEHMERSTATION**

METHOD AND RADIO COMMUNICATIONS SYSTEM FOR TRANSMITTING DATA OVER A RADIO INTERFACE BETWEEN A BASE STATION AND A SUBSCRIBER STATION

PROCEDE ET SYSTEME DE COMMUNICATION RADIO POUR LA TRANSMISSION DE DONNEES PAR L'INTERMEDIAIRE D'UNE INTERFACE RADIO ENTRE UNE STATION DE BASE ET UNE STATION D'ABONNE

(84) Benannte Vertragsstaaten:
**DE ES FR GB**

(30) Priorität: **06.10.1998 DE 19846068**

(43) Veröffentlichungstag der Anmeldung:
**01.08.2001 Patentblatt 2001/31**

(73) Patentinhaber: **SIEMENS AKTIENGESELLSCHAFT
80333 München (DE)**

(72) Erfinder:
• **SOMMER, Volker
D-13503 Berlin (DE)**
• **SITTE, Armin
D-10405 Berlin (DE)**

(56) Entgegenhaltungen:
**WO-A-96/22639**

• **OVESJO F AND AL: "FRAMES MULTIPLE ACCESS MODE 2-WIDEBAND CDMA" IEEE INTERNATIONAL SYMPOSIUM ON PERSONAL, INDOOR AND MOBILE RADIO COMMUNICATIONS,XX,XX, Bd. 1, 1. September 1997 (1997-09-01), Seiten 42-46, XP002085886**
• **NIKULA E ET AL: "FRAMES MULTIPLE ACCESS FOR UMTS AND IMT-2000" IEEE PERSONAL COMMUNICATIONS,US,IEEE COMMUNICATIONS SOCIETY, Bd. 5, Nr. 2, 1. April 1998 (1998-04-01), Seiten 16-24, XP000751831 ISSN: 1070-9916**

**Beschreibung**

Die Erfindung betrifft ein Verfahren und ein Funk-Kommunikationssystem zur Datenübertragung über eine Funkschnittstelle zwischen einer Basisstation und einer Teilnehmerstation, insbesondere über breitbandige Funkschnittstellen, die ein CDMA-Teilnehmerseparierungsverfahren verwenden und pro Verbindung mehrere Dienste gleichzeitig bereitstellen.

In Funk-Kommunikationssystemen werden Nachrichten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Für die dritte Mobilfunkgeneration sind breitbandige (B = 5 MHz) Funkschnittstellen vorgesehen, die ein CDMA-Teilnehmerseparierungsverfahren (CDMA code division multiple access) zur Unterscheidung unterschiedlicher Übertragungskanäle verwenden und pro Verbindung mehrere Dienste gleichzeitig bereitstellen können. Dabei ergibt sich das Problem, wie die Daten verschiedener Dienste einer Verbindung zeitlich gemultiplext, d.h. in einen Rahmen eingetragen, werden sollen. Die Übertragungskapazität der Funkschnittstelle ist bestmöglich zu nutzen, unter Berücksichtigung einer hohen Dynamik in der Varianz der Datenraten der einzelnen Dienste. Dazu wurde in ETSI SMG2/UMTS L23 expert group, Tdoc SMG2 UMTS-L23 152/98, am 1.-4.9.1998, in Helsinki, Finnland, insbesondere S.11-15, vorgeschlagen, mehrere Transportformate vorzugeben und zulässige Kombinationen dieser Transportformate beim Verbindungsaufbau für jede Verbindung festzulegen. Entsprechend der Dynamik der Bitraten der einzelnen Dienste kann zwischen den Kombinationen gewechselt werden, wobei ein solcher Wechsel rahmenweise signalisiert wird. Dies wurde ebenfalls in "FRAMES Multiple Access Mode 2 - Wide band CDMA', OVESSÖ und al , IEEE International Symposium on Personal, Indoor and Mobile Radio Communication, vol .1.1, 09/97, vorgeschlagen.

Durch die rahmenweise Anpassung des Transportformats kann der Dynamik des Datenaufkommens mit geringem Signalisierungsaufwand entsprochen werden. Der Signalisierungsaufwand zum Verbindungsaufbau ist jedoch hoch und die vorher festgelegten Kombinationen begrenzen die Variationsmöglichkeiten. Dies wirkt sich besonders bei Datendiensten mit "burst"-förmigen Verkehr auf die mittlere Kanalkapazität nachteilig aus, wenn hohe Ubertragungsraten plötzlich auf längere Pausen folgen. Auch die Auswahl einer der Kombinationen ist noch nicht befriedigend gelöst worden.

Der Erfindung liegt folglich die Aufgabe zugrunde, ein Verfahren und ein Funk-Kommunikationssystem anzugeben, bei denen zur gleichzeitigen Übertragung von Daten mehrerer Dienste der Kodieraufwand für die Formatinformation gering ist und keine Abhängigkeiten zwischen den Diensten die Kombinationsmöglichkeiten einschränken. Diese Aufgabe wird durch das Verfahren mit den Merkmalen des Anspruchs 1 und das Funk-Kommunikationssystem mit den Merkmalen des Anspruchs 12 gelöst. Vorteilhafte Weiterbildungen der Erfindung sind den Unteransprüchen zu entnehmen.

Erfindungsgemäß sind Daten mehrerer Dienste zwischen der Basisstation und der Teilnehmerstation gleichzeitig zu übertragen. Dabei wird als kleinste übertragungseinheit eine dienstspezifische Blockgröße verwendet, die für jeden Dienst individuell festlegbar ist. Abhängig von der momentan zu übertragenden Datenmenge fällt pro Rahmen eine Anzahl von zu übertragenden Blöcken je Dienst an. Diese Anzahl von Blöcken für jeden Dienst wird für jeden Rahmen signalisiert.

Die Anordnung der Blöcke der Dienste im Rahmen ergibt sich nach einer vorgegebenen Kodierung aus der Anzahl von Diensten und der Anzahl von Blöcken pro Dienst. Diese Abbildungsvorschrift, die in Folge Kodierung genannt wird, ist eindeutig und somit beim Empfänger ohne weitere Signalisierung nachvollziehbar. Die Formatinformation ergibt sich also eindeutig aus der übertragenen Informationsmenge.

Die Daten werden entsprechend der vorgegebenen Kodierung in den Rahmen eingetragen, ein Rahmen mit Blöcken mehrerer Dienste über die Funkschnittstelle übertragen, und empfangsseitig werden die Daten entsprechend der vorgegebenen Kodierung und der signalisierten Anzahl von Blöcken pro Dienst aus dem Rahmen ausgelesen.

Das übertragungsformat, in Form der Blockgröße und Anzahl von Blöcken, wird dienstabhängig ohne Abhängigkeiten zwischen den Diensten festlegt und kann dynamisch der Datenrate jedes einzelnen Dienstes individuell angepaßt werden. Diese uneingeschränkte Dynamik erlaubt es, auch bei stark schwankenden Datenraten der einzelnen Dienste die Daten vollständig auf die Übertragunskanäle abzubilden. Damit wird es möglich mit der maximal möglichen Datenrate zu übertragen, wodurch die zur Verfügung stehenden funktechnischen Ressourcen zu jedem Zeitpunkt besser genutzt werden.

Für jeden der Dienste kann der benötigte Dynamikbereich frei gewählt werden. Damit ist es möglich, für bestimmte Dienste, deren Datenrate sehr schnell schwankt, eine große Variation der belegten Ressourcen zuzulassen. Anderen Diensten kann eine feste oder sich nur geringfügig ändernde Datenrate zugeordnet werden. Der Kodieraufwand für die Formatinformation ist dienstspezifisch festlegbar und kann somit sehr flexibel an die geforderte Dynamik angepaßt werden. Er ist insbesamt nicht höher als beim bisherigen Verfahren, da insbesondere der Signalisierungsaufwand zum Verbindungsaufbau sinkt. Die aufwendige Bestimmung der optimalen Kombination von Übertragungsformaten entfällt.

Nach vorteilhaften Weiterbildungen der Erfindung gibt die vorgegebene Kodierung die Reihenfolge der Blökke, die Anzahl der gleichzeitig benutzten Übertragungskanäle und/oder die in den Übertragungskanälen verwendeten Spreizfaktoren an. Diese Angaben müssen also nicht signalisiert werden, sondern ergeben sich in eindeutiger Weise aus der Blockgröße und der Blockanzahl pro Dienst. Dies senkt die Signalisierungsaufwand.

Zur Signalisierung der Anzahl von Blöcken pro Dienst erfolgt entweder in jedem Rahmen als absolute Angabe oder relativ zu den Angaben des vorherigen Rahmens. Die absolute Kodierung eignet sich besser für Dienste mit wenigen aber a-priori bekannten Datenraten. Die Datenrate kann sehr plötzlich umgeschaltet werden und eine anfängliche Übertragung der Blockanzahl kann entfallen. Die relative Kodierung erlaubt eine sehr genaue Anpassung der Datenrate an den tatsächlichen Datenstrom des Dienstes, wobei eine beliebige Anzahl von Blöcken zwischen 0 und dem Maximalwert der Datenrate vergeben werden kann.

Vorteilhafterweise wird die Anzahl von Blöcken pro Dienst von Rahmen zu Rahmen mit unterschiedlich großen Stufen verändert. D.h. bei der absoluten Kodierung kann sehr schnell zwischen den unterschiedlichsten Datenraten geschaltet werden und bei der relativen Kodierung kann die Anpassungsgeschwindigkeit der Datenrate variiert werden. Durch Zuweisung einer unterschiedlichen Stufenanzahl für jeden Dienst kann die spezifische Dynamik von Datenquellen berücksichtigt werden. Die relative und absolute Kodierung können auch miteinander kombiniert werden. Die Blockgröße kann vorteilhafterweise ein Bit sein, wodurch die signalisierte Anzahl von Blocks die Informationsmenge widerspiegelt.

Die vorgegebene Kodierung ist systemweit festgelegt oder wird bei einem Verbindungsaufbau zwischen zwischen der Basisstation und der Teilnehmerstation festgelegt. Eine systemweite Festlegung minimiert den Signalisierungsaufwand währenddessen die Signalisierung beim Verbindungsaufbau zusätzliche Freiheitsgrade schafft.

Nach einer vorteilhaften Weiterbildung der Erfindung minimiert die vorgegebene Kodierung die Anzahl von Übertragungskanälen pro Verbindung zwischen der Basisstation und der Teilnehmerstation. Dies wird durch entsprechende Wahl der Spreizfaktoren erreicht.

Ausführungsbeispiele der Erfindung werden anhand der beiliegenden Zeichnungen näher erläutert.

Dabei zeigen

Fig 1     eine schematische Darstellung eines Funk-Kommunikationssystems,
Fig 2     eine schematische Darstellung von Anforderungen an drei gleichzeitig zu übertragende Dienste,
Fig 3     ein Ablaufdiagramm für die Datenübertragung, und
Fig 4     eine Abbildung der Dienste auf die Übertragungskanäle zu unterschiedlichen Zeitpunkten

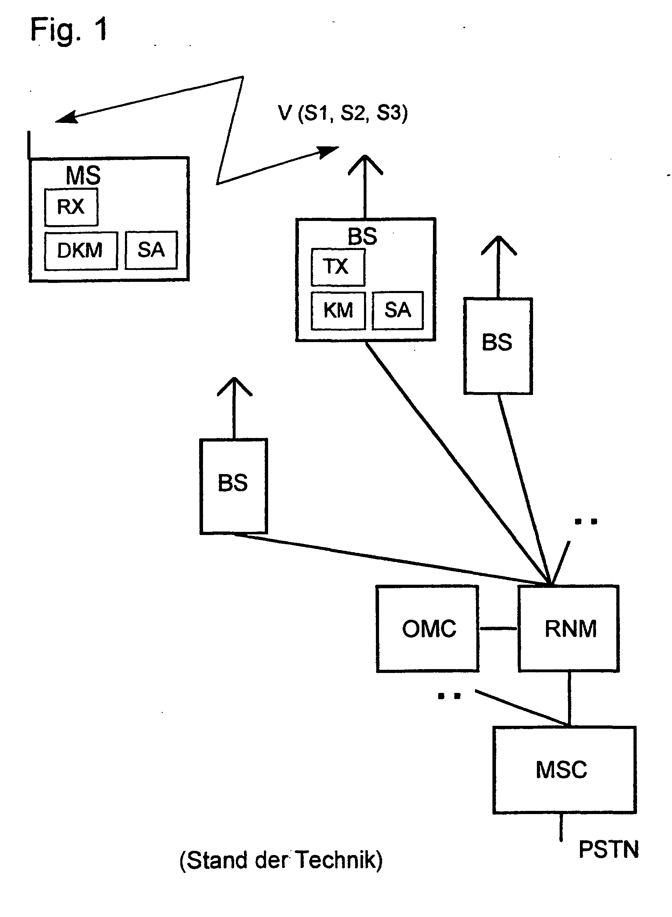

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu Teilnehmerstationen, z.B. Mobilstationen MS oder anderweitigen mobilen und stationären Endgeräten aufbauen. Durch jede Basisstation BS wird zumindest eine Funkzelle gebildet.

In Fig 1 ist eine Verbindung V zur gleichzeitiger Übertragung von Nutzinformationen mehrerer Dienste S1, S2, S3 zwischen einer Basisstation BS und einer Mobilstation MS dargestellt.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Es wird im folgenden die unidirektionale Datenübertragung von der Basisstation BS zur Mobilstation MS näher erläutert und die dazu verwendeten Mittel erklärt. Die Basisstation BS repräsentiert dabei die Sendeseite und die Mobilstation MS die Empfangsseite. Für eine bidirektionale Datenübertragung enthalten beide Seiten die entsprechenden Komponenten. Die Sendeseite umfaßt Signalisierungsmittel SA zum Erzeugen von Signalisierungsinformationen, Kodiermittel KM zum Eintragen von Daten der Dienste S1, S2, S3 in einen Rahmen und Übertragungsmittel TX zum Übertragen von Rahmen zur Empfangsseite. Empfangsseitig sind Empfangsmittel RX zum Empfangen der Rahmen, Dekodiermittel DKM zum Auslesen der Daten aus dem Rahmen und Signalisierungsmittel SA zum Auswerten der Signalisierungsinformationen vorgesehen. Die Kodier-, Dekodier- und Signalisierungsmittel KM, DKM und SA werden mittels digitaler Signalverarbeitungsprozessoren realisiert, währenddessen die Übertragungs- und Empfangsmittel TX, RX auch Hochfrequenzkomponenten umfassen.

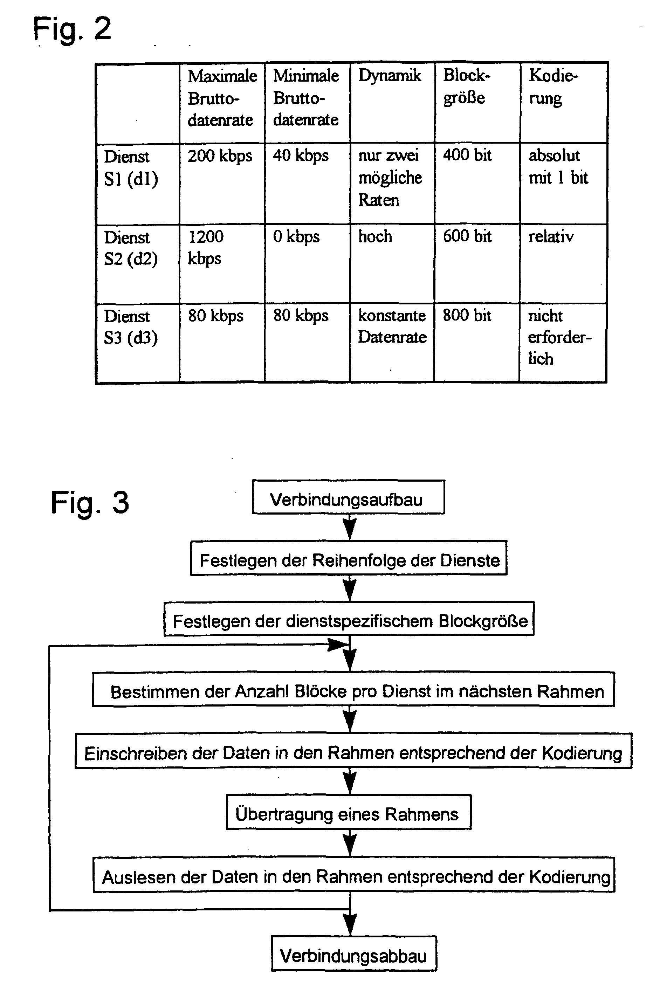

Innerhalb der Verbindung V werden gleichzeitig die Daten d1, d2, d3 von drei unterschiedlichen Diensten S1, S2, S3 nach Fig 2 übertragen. Diese drei Dienste S1, S2, S3 unterscheiden sich stark in den möglichen Werten und der Dynamik der Datenrate. Dementsprechend wurden die Blockgrößen B und eine absolute oder relative Kodierung gewählt.

Nach Fig 3 wird nach einem Verbindungsaufbau, der die zu unterstützenden Dienste S1, S2, S3 und den Verbindungskontext bestimmt, die Reihenfolge der Dienste S1, S2, S3 bei der Übertragung festgelegt, z.B. anhand einer Priorisierung, einzuhaltenden Verzögerungszeiten und der Füllung einer Warteschlange. Ebenso erfolgt das Festlegen einer dienstspezifischen Blockgröße B. Jeder Dienst i kann eine eigene Blockgröße Bi haben, die die Granularität festlegt. Die Datenübertragung erfolgt damit immer in Vielfachen dieser Blockgroße Bi. Im Extremfall ist die Blockgröße Bi gleich einem Bit, so daß die Anzahl zu übertragender Blöcke mit der Datenmenge in Bit zusammenfällt.

Entsprechend der bei der Datenquelle anfallenden Datenmenge wird daraufhin vor jeder Übertragung eines Rahmens fr bestimmt, wieviele Blöcke pro Dienst S1, S2, S3 im nächsten Rahmen fr enthalten sind. Dabei spielt auch die maximal zulässige Verzögerung für jeden Dienst S1, S2, S3 und die Priorisierung eine Rolle.

Vor dem Einschreiben der Daten in den Rahmen fr werden die Daten der einzelnen Dienste S1, S2, S3 einzeln kanalkodiert und einem sogenannten Balancing-Algorithmus unterzogen, damit jeder Dienst S1, S2, S3 innerhalb des zu sendenden Signals, das ein gmeinsames Signal/Rausch-Verhältnis erzwingt, seine individuelle Dienstqualität (QoS) erhält. Danach weist jeder Dienst S1, S2, S3 eine bestimmt Bruttodatenrate Ri auf, aus der sich bei einer Rahmendauer von beispielsweise 10 ms die Anzahl Ni der pro Rahmen insgesamt zu übertragenden Bits ergibt:

$$Ni = 10(Ri/kbps) \text{ bit}$$

Anschließend erfolgt optional ein Verwürfeln der Daten über mehrere Rahmen. Die Parameter der Verwürfelung können wiederum für jeden Dienst S1, S2, S3 individuell eingestellt werden. Je größer die für den Dienst S1, S2, S3 erlaubte Verzögerungszeit ist, umso größer kann die Verwürfelungstiefe gewählt werden.

Die Anzahl der insgesamt zu übertragenden Bits in einem Rahmen fr ergibt sich aus der Summe Nreq der Bits aller Dienste S1, S2, S3.

Unter der Randbedingung, daß pro Verbindung V möglichst wenig Übertragungskanäle benutzt werden sollen, kann aus der Summe Nreq eindeutig die Anzahl der erforderlichen Übertragungskanäle m und der zugehörigen Spreizfaktoren SFj mit j=1..m abgeleitet werden, da dann bei m>1 alle Kanäle bis auf einen den minimalen Spreizfaktor SF=4 aufweisen:

$$m = \left\lceil \frac{Nreq}{bit/fr} \cdot \frac{1}{10240} \right\rceil$$

mit $\lceil \ \rceil$ als Aufrundungsoperator

$$SFm = Min\left(\left\lfloor \frac{40960}{\frac{Nreq}{bit/fr} - (m-1)\cdot 10240} \right\rfloor, 256\right)$$

mit $\lfloor \ \rfloor$ als Abrundungsoperator auf die nächste Zweierpotenz

SF = 4 für m>1 und j=1..m-1.

Die Konstanten 10240 und 40960 sind auf die maximale Anzahl von Bits bzw. Chips pro Rahmen mit dem minimalen Spreizfaktor SF=4 bezogen, wobei ein CDMA-Übertragungsschema nach ETSI STC SMG2 UMTS-L1, Tdoc SMG2 UMTS-L1 221/98, vom 25.8.1998, angenommen wird.

Diese Kodierung ist sende- und empfangsseitig bekannt und kann systemweit festgelegt sein oder beim Verbindungsaufbau signalisiert werden. Alternativ können auch andere Randbedingungen vorgegeben werden, die zu einer anderen Kodierung (Anzahl m der Übertragungskanäle, die verwendeten Spreizfaktoren SF und die Reihenfolge von Blöcken innerhalb des Rahmens fr) als Abbildungsschema der Daten d1, d2, d3 in den Rahmen fr führen. Die Kodierung muß sich lediglich eindeutig auf Sende- und Empfangsseite aus der übertragenen Informationsmenge, in Form von Anzahl der Blöcke K, Anzahl von Bits K oder entsprechend einer blinden Detektion im Prozeß der Detektion ergeben.

Beim Einschreiben der Daten in den Rahmen fr wird diese vorgegebene Kodierung verwendet. Von Rahmen fr zu Rahmen fr muß nur die Anzahl K der Blöcke pro Dienst S1, S2, S3 mitgeteilt werden.

Die Signalisierung der Blockanzahl K kann absolut oder relativ zum vorhergehenden Rahmen erfolgen.

Absolut:

Dem Dienst i wird ein Satz mit z verschiedenen Vielfachen der Blockgröße B zugeordnet. Zur Kodierung des verwendeten Elements im Satz werden 16(z) bit benötigt.
z.B. mit z=4: Kil=7, Ki2=9, Ki3=10, Ki4=12. Die Anzahl der in einem Rahmen übertragbaren Blöcke dieses Dienstes ist also entweder 7, 9, 10 oder 12.

Relativ:

Die Anzahl der Blöcke Ki für den Dienst i im aktuellen Rahmen fr wird relativ zu der Blockanzahl im vorherigen Rahmen fr angegeben. Dem Dienst werden eine Anzahl von z, nicht unbedingt gleichgroßen Stufen zugeordnet, in denen die Anzahl der Blöcke zu- oder abnehmen kann. Zur Kodierung werden auch hier lb(z) bit benötigt.
z.B. mit z=5: $\Delta Ki1$=-2, $\Delta Ki2$=-1, $\Delta Ki3$=-0, $\Delta Ki4$=2, $\Delta Ki5$=4 Abhängig von der Signalisierung kann die Blockanzahl Ki um zwei oder einen Block reduziert oder um zwei oder vier Blöcke erhöht werden. Sie kann jedoch auch gleichbleiben.

Mit Hilfe der Kodierung und der signalisierten Blockanzahl K kann nach der Übertragung, die über die Funkschnittstelle nach einem CDMA-Teilnehmerseparierungsverfahren nach ETSI STC SMG2 UMTS-L1, Tdoc SMG2 UMTS-L1 221/98, vom 25.8.1998 erfolgt, empfangsseitig das Auslesen der Daten aus dem Rahmen durchgeführt werden. Die Übertragung wird fortgesetzt mit einer ständig möglichen Anpassung der Blockanzahl K bis zum Verbindungsabbau.

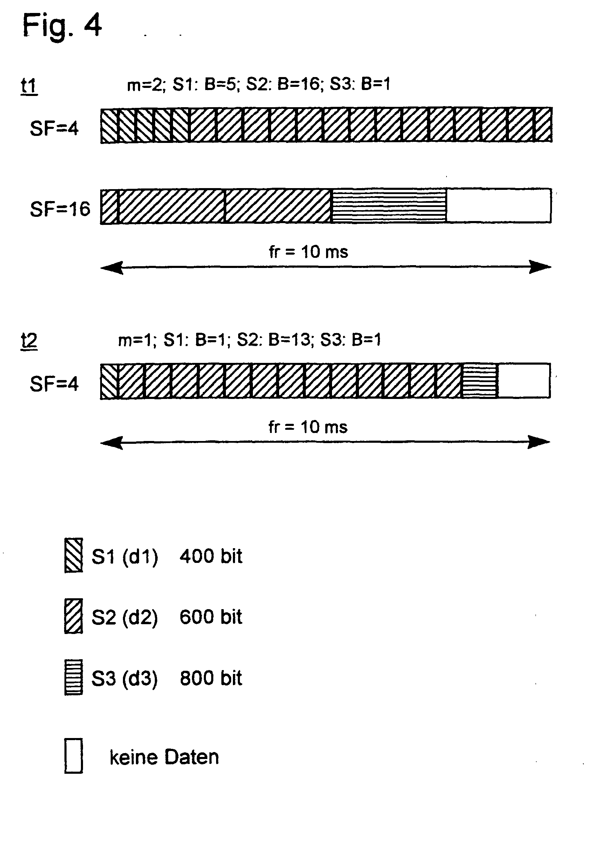

Für die drei Dienste S1, S2, S3 von Fig 2 ist in Fig 4 in zwei Momentandarstellungen zu Zeitpunkten t1 und t2 eine übertragung in den dargestellten Formaten möglich.

Zum Zeitpunkt t1 sind für den ersten Dienst S1 fünf Blöcke, für den zweiten Dienst S2 16 Blöcke und den dritten Dienst S3 1 Block zu übertragen. Die Datenraten entsprechen also 2000 bit pro Rahmen fr von 10 ms (200 kbps), 9600 bit pro Rahmen fr bzw. 800 bis pro Rahmen fr. Entsprechend der zuvor geschilderten Kodierungsvorschrift ergibt sich m=2, wobei im ersten Übertragungskanal mit minimalen Spreizfaktor SF=4 und im zweiten Übertragungskanal mit einem Spreizfaktor SF=16 die Daten gespreizt werden. Insgesamt stehen damit 12.800 bit Übertragungskapazität pro Rahmen fr zur Verfügung.

Beim Füllen der Rahmen fr werden die Zeitschlitze nicht beachtet. So wird ¾ des letzten Blockes im ersten Übertragungskanal und das letzte ¼ dieses Blockes entsprechend stärker gespreizt im zweiten Übertragungskanal übertragen. Ein Teil des zweiten Übertragungskanals wird nicht benötigt und bleibt in Abwärtsrichtung (von Basisstation BS zur Mobilstation MS) frei, d.h. der Sender wird abgeschaltet. In Aufwärtsrichtung, aber optional auch in Abwärtsrichtung kommt ein Ausgleichsverfahren mit Datenratenanpassung durch Datenwiederholung oder Punktierung zur Anwendung, und der Sender wird nicht abgeschaltet.

Zum Zeitpunkt t2 müssen nur insgesamt 9000 bit pro Rahmen übertragen werden, so daß ein übertragungskanal mit dem Spreizfaktor SF=4 ausreicht. In dem einen Übertragungskanal werden ein Block des ersten Dienstes S1, 13 Blöcke des zweiten Dienstes S2 und ein Block des dritten Dienstes S3 übertragen.

**Patentansprüche**

1. Verfahren zur Datenübertragung über eine Funkschnittstelle zwischen einer Basisstation (BS) und einer Teilnehmerstation (MS) in einem Funk-Kommunikationssystem, bei dem

   - Daten (d1, d2, d3) mehrerer Dienste (S1, S2, S3) zwischen der Basisstation (BS) und der Teilnehmerstation (MS) gleichzeitig zu übertragen sind,
   - als kleinste übertragungseinheit eine dienstspezifische Blockgröße (B) verwendet wird,
   - für jeden Rahmen (fr) die Anzahl (K) der Blöcke der Dienste (S1, S2, S3) signalisiert wird,
   - die Anordnung der Blöcke der Dienste (S1, S2, S3) im Rahmen (fr) sich aus der Anzahl von Diensten (S) und Anzahl (K) von Blöcken pro Dienst (S1, S2, S3) nach einer vorgegebenen Kodierung ergibt,
   - die Daten (d1, d2, d3) entsprechend der vorgegebenen Kodierung in den Rahmen (fr) eingetragen werden,
   - ein Rahmen (fr) mit Blöcken mehrerer Dienste (S1, S2, S3) über die Funkschnittstelle übertragen wird, und
   - empfangsseitig die Daten (d1, d2, d3) entsprechend der signalisierten Anzahl (K) von Blöcken pro Dienst (S1, S2, S3) und der vorgegebenen Kodierung aus dem Rahmen (fr) ausgelesen werden.

**2.** Verfahren nach Anspruch 1, bei dem
die vorgegebene Kodierung die Reihenfolge der Blöcke angibt.

**3.** Verfahren nach einem der vorherigen Ansprüche, bei dem die vorgegebene Kodierung die Anzahl der zwischen der Basisstation (BS) und der Teilnehmerstation (MS) gleichzeitig benutzten Übertragungskanäle angibt.

**4.** Verfahren nach einem der vorherigen Ansprüche, bei dem die Übertragung der Daten (d1, d2, d3) über breitbandige Übertragungskanäle erfolgt und die vorgegebene Kodierung die in den Ubertragungskanälen verwendeten Spreizfaktoren (SF) angibt.

**5.** Verfahren nach einem der vorherigen Ansprüche, bei dem die Signalisierung der Anzahl (K) von Blöcken pro Dienst (S1, S2, S3) in jedem Rahmen (fr) als absolute Angabe erfolgt.

**6.** Verfahren nach einem der Ansprüche 1 bis 4, bei dem die Signalisierung der Anzahl (K) von Blöcken pro Dienst (S1, S2, S3) in jedem Rahmen (fr) relativ zu den Angaben des vorherigen Rahmens (fr) erfolgt.

**7.** Verfahren nach einem der Ansprüche 5 oder 6, bei dem die Anzahl (K) von Blöcken pro Dienst (S1, S2, S3) von Rahmen (fr) zu Rahmen (fr) mit unterschiedlich großen Stufen verändert wird.

**8.** Verfahren nach einem der vorherigen Ansprüche, bei dem die vorgegebene Kodierung systemweit festgelegt ist.

**9.** Verfahren nach einem der vorherigen Ansprüche, bei dem die vorgegebene Kodierung bei einem Verbindungsaufbau zwischen zwischen der Basisstation (BS) und der Teilnehmerstation (MS) festgelegt wird.

**10.** Verfahren nach einem der vorherigen Ansprüche, bei dem die vorgegebene Kodierung pro Verbindung zwischen der Basisstation (BS) und der Teilnehmerstation (MS) die Anzahl von übertragungskanälen minimiert.

**11.** Verfahren nach einem der vorherigen Ansprüche, bei dem die Blockgröße (B) ein Bit ist.

**12.** Funk-Kommunikationssystem
mit zumindest einer Basisstation (BS) und einer Teilnehmerstation (MS), die zur gleichzeitigen Datenübertragung von Daten (d1, d2, d3) mehrerer Dienste (S1, S2, S3) über eine Funkschnittstelle verbunden sind, wobei als kleinste übertragungseinheit eine dienstspezifische Blockgröße (B) verwendet wird,
mit Signalisierungsmitteln (SA), die für jeden zu übertragenden Rahmen (fr) die Anzahl (K) der Blöcke der Dienste (S1, S2, S3) signalisieren,
mit Kodiermitteln (KM), die nach einer vorgegebenen Kodierung, der Anzahl von Diensten (S1, S2, S3) und Anzahl (K) von Blöcken pro Dienst (S1, S2, S3) die Daten (d1, d2, d3) in den Rahmen (fr) eintragen,
mit Übertragungsmitteln (TX), die einen Rahmen (fr) mit Blöcken mehrerer Dienste (S1, S2, S3) über die Funkschnittstelle übertragen, und
mit Dekodiermitteln (DKM), die empfangsseitig die Daten (d1, d2, d3) entsprechend der vorgegebenen Kodierung und der signalisierten Anzahl (K) von Blöcken pro Dienst (S1, S2, S3) aus dem Rahmen (fr) auslesen.

**Claims**

**1.** Method for transmitting data over a radio interface between a base station (BS) and a subscriber station (MS) in a radio communication system, wherein

- data (d1, d2, d3) of a number of services (S1, S2, S3) are to be simultaneously transmitted between the base station (BS) and the subscriber station (MS),
- a service-specific block size (B) is used as the smallest transmission unit,
- the number (K) of the blocks of the services (S1, S2, S3) is signalled for each frame (fr),
- the arrangement of the blocks of the services (S1, S2, S3) in the frame (fr) is obtained from the number of services (S) and number (K) of blocks per service (S1, S2, S3) in accordance with a predetermined coding,
- the data (d1, d2, d3) are entered into the frame (fr) in accordance with the predetermined coding,
- a frame (fr) containing blocks of a number of services (S1, S2, S3) is transmitted over the radio interface, and
- at the receiving end, the data (d1, d2, d3) are read out from the frame (fr) in accordance with the signalled number (K) of blocks per service (S1, S2, S3) and the predetermined coding.

2. Method according to Claim 1, wherein the predetermined coding specifies the order of the blocks.

3. Method according to one of the preceding claims, wherein the predetermined coding specifies the number of transmission channels simultaneously used between the base station (BS) and the subscriber station (MS).

4. Method according to one of the preceding claims, wherein the data (d1, d2, d3) are transmitted via broadband transmission channels and the predetermined coding specifies the spreading factors (SF) used in the transmission channels.

5. Method according to one of the preceding claims, wherein the signalling of the number (K) of blocks per service (S1, S2, S3) in each frame (fr) is carried out as absolute information.

6. Method according to one of Claims 1 to 4, wherein the signalling of the number (K) of blocks per service (S1, S2, S3) in each frame (fr) is carried out in relation to the information of the previous frame (fr).

7. Method according to either of Claims 5 and 6, wherein the number (K) of blocks per service (S1, S2, S3) is changed from frame (fr) to frame (fr) with steps of different sizes.

8. Method according to one of the preceding claims, wherein the predetermined coding is defined throughout the system.

9. Method according to one of the preceding claims, wherein the predetermined coding is established during the setting-up of a connection between the base station (BS) and the subscriber station (MS).

10. Method according to one of the preceding claims, wherein the predetermined coding per connection between the base station (BS) and the subscriber station (MS) minimizes the number of transmission channels.

11. Method according to one of the preceding claims, wherein the block size (B) is one bit.

12. Radio communication system comprising at least one base station (BS) and one subscriber station (MS), which are connected via a radio interface for the simultaneous transmission of data (d1, d2, d3) of a number of services (S1, S2, S3), wherein a service-specific block size (B) is used as the smallest transmission unit,
comprising signalling means (SA) which signal the number (K) of the blocks of the services (S1, S2, S3) for each frame (fr) to be transmitted,
comprising coding means (KM) which enter the data (d1, d2, d3) into the frame (fr) in accordance with a predetermined coding of the number of services (S1, S2, S3) and number (K) of blocks per service (S1, S2, S3),
comprising transmission means (TX) which transmit a frame (fr) containing blocks of a number of services (S1, S2, S3) via the radio interface, and
comprising decoding means (DKM) which, at the receiving end, read out the data (d1, d2, d3) from the frame (fr) in accordance with the predetermined coding and the signalled number (K) of blocks per service (S1, S2, S3).


**Revendications**

1. Procédé pour la transmission de données entre une station de base (BS) et une station d'abonné (MS) dans un système de communication radio par l'intermédiaire d'une interface radio, dans lequel

   - des données (d1, d2, d3) de plusieurs services (S1, S2, S3) sont à transmettre simultanément entre la station de base (BS) et la station d'abonné (MS),
   - une taille de bloc (B) spécifique au service est utilisée comme unité de transmission la plus petite,
   - le nombre (K) de blocs des services (S1, S2, S3) est signalé pour chaque trame (fr),
   - la disposition des blocs des services (S1, S2, S3) dans la trame (fr) résulte du nombre de services (S) et du nombre (K) de blocs par service (S1, S2, S3) selon un codage prédéfini
   - les données (d1, d2, d3) sont inscrites dans les trames (fr) conformément au codage prédéfini,
   - une trame (fr) ayant des blocs de plusieurs services (S1, S2, S3) est transmise par l'intermédiaire de l'interface radio, et
   - les données (d1, d2, d3) sont lues, côté réception, dans les trames (fr) conformément au nombre (K) signalé de blocs par service (S1, S2, S3) et au codage prédéfini.

**2.** Procédé selon la revendication 1, dans lequel
le codage prédéfini indique l'ordre des blocs.

**3.** Procédé selon l'une quelconque des revendications précédentes, dans lequel
le codage prédéfini indique le nombre de canaux de transmission utilisés simultanément entre la station de base (BS) et la station d'abonné (MS).

**4.** Procédé selon l'une quelconque des revendications précédentes, dans lequel
la transmission des données (d1, d2, d3) est réalisée par l'intermédiaire de canaux de transmission à large bande et le codage prédéfini indique les facteurs d'étalement (SF) utilisés dans les canaux de transmission.

**5.** Procédé selon l'une quelconque des revendications précédentes, dans lequel
la signalisation du nombre (K) de blocs par service (S1, S2, S3) dans chaque trame (fr) est réalisée comme indication absolue.

**6.** Procédé selon l'une quelconque des revendications 1 à 4, dans lequel
la signalisation du nombre (K) de blocs par service (S1, S2, S3) dans chaque trame (fr) est réalisée de manière relative par rapport aux indications de la trame (fr) précédente.

**7.** Procédé selon l'une quelconque des revendications 5 ou 6, dans lequel
le nombre (K) de blocs par service (S1, S2, S3) est modifié de trame (fr) en trame (fr) avec des échelons de différentes grandeurs.

**8.** Procédé selon l'une quelconque des revendications précédentes, dans lequel
le codage prédéfini est déterminé dans tout le système.

**9.** Procédé selon l'une quelconque des revendications précédentes, dans lequel
le codage prédéfini est déterminé lors d'un établissement de connexion entre la station de base (BS) et la station d'abonné (MS).

**10.** Procédé selon l'une quelconque des revendications précédentes; dans lequel
le codage prédéfini minimise le nombre de canaux de transmission entre la station de base (BS) et la station d'abonné (MS) par connexion.

**11.** Procédé selon l'une quelconque des revendications précédentes, dans lequel
la taille des blocs (B) est un bit.

**12.** Système de communication radio
comprenant au moins une station de base (BS) et une station d'abonné (MS) qui sont connectées pour la transmission simultanée de données (d1, d2, d3) de plusieurs services (S1, S2, S3) par l'intermédiaire d'une interface radio, une taille de bloc (B) spécifique au service étant utilisée comme unité de transmission la plus petite,
comprenant des moyens de signalisation (SA) signalant le nombre (K) de blocs des services (S1, S2, S3) pour chaque trame (fr) à transmettre,
comprenant des moyens de codage (KM) qui inscrivent les données (d1, d2, d3) dans les trames (fr) selon un codage prédéfini, selon le nombre de services (S1, S2, S3) et le nombre (K) de blocs par service (S1, S2, S3),
comprenant des moyens de transmission (TX) qui transmettent une trame (fr) avec des blocs de plusieurs services (S1, S2, S3) par l'intermédiaire de l'interface radio, et
comprenant des moyens de décodage (DKM) qui, du côté réception, lisent les données (d1, d2, d3) dans les trames (fr), conformément au codage prédéfini et au nombre (K) signalé de blocs par service (S1, S2, S3}.

# Fig. 1

V (S1, S2, S3)

**MS**
RX
DKM  SA

**BS**
TX
KM  SA

**BS**

**BS**

..

OMC —— RNM

..

MSC

PSTN

(Stand der Technik)

EP 1 119 927 B1

# Fig. 2

|  | Maximale Brutto-datenrate | Minimale Brutto-datenrate | Dynamik | Block-größe | Kodie-rung |
|---|---|---|---|---|---|
| Dienst S1 (d1) | 200 kbps | 40 kbps | nur zwei mögliche Raten | 400 bit | absolut mit 1 bit |
| Dienst S2 (d2) | 1200 kbps | 0 kbps | hoch | 600 bit | relativ |
| Dienst S3 (d3) | 80 kbps | 80 kbps | konstante Datenrate | 800 bit | nicht erforder-lich |

# Fig. 3

Verbindungsaufbau

Festlegen der Reihenfolge der Dienste

Festlegen der dienstspezifischem Blockgröße

Bestimmen der Anzahl Blöcke pro Dienst im nächsten Rahmen

Einschreiben der Daten in den Rahmen entsprechend der Kodierung

Übertragung eines Rahmens

Auslesen der Daten in den Rahmen entsprechend der Kodierung

Verbindungsabbau

# Fig. 4

t1  m=2; S1: B=5; S2: B=16; S3: B=1

SF=4

SF=16

fr = 10 ms

t2  m=1; S1: B=1; S2: B=13; S3: B=1

SF=4

fr = 10 ms

S1 (d1)  400 bit

S2 (d2)  600 bit

S3 (d3)  800 bit

keine Daten